# EUROPEAN PATENT SPECIFICATION

(11) **EP 3 413 721 B1**
(45) Date of publication and mention of the grant of the patent: **25.12.2019**
(21) Application number: 17718355.5
(22) Date of filing: 18.04.2017
(51) Int. Cl.: A23G 1/00, A23G 1/54

(54) **PROCEDURE FOR PRODUCING AN EGG FOR THE CONFECTIONERY INDUSTRY BASED ON CHOCOLATE AND/OR PASTRY CREAM, AND AN EGG REALIZED IN THIS WAY**
VERFAHREN ZUR HERSTELLUNG EINES EIES FÜR DIE SÜSSWARENINDUSTRIE AUF BASIS VON SCHOKOLADE UND/ODER KONDITORCREME SOWIE EIN AUF DIESE WEISE HERGESTELLTES EI
PROCÉDÉ DE FABRICATION D'UN OEUF POUR L'INDUSTRIE DE LA CONFISERIE À BASE DE CHOCOLAT ET/OU CRÈME PÂTISSIÈRE, ET OEUF AINSI OBTENU

(30) Priority: 22.04.2016 IT UA20162845
(43) Date of publication of application: 19.12.2018
(73) Proprietor: Luigi Zaini S.p.A., 20159 Milano (IT)
(72) Inventor: ZAINI, Luigi, 20122 Milano (IT)
(74) Representative: Rapisardi, Mariacristina
(86) International application number: PCT/EP2017/059106
(87) International publication number: WO 2017/182426

(56) References cited:
- EP-A1- 1 018 302
- EP-A1- 1 433 384
- EP-A2- 0 064 155
- BE-A3- 1 017 177
- DE-A1- 19 851 063
- GB-A- 2 342 312
- US-A1- 2015 272 157

## Description

The present invention relates to an egg for the confectionery industry based on chocolate and/or pastry cream, and to a procedure for its realization.

In the confectionery industry chocolate eggs are known, formed by two half-shells perimetrally joined for delimiting a compartment usually intended to house a surprise inside it. (e.g. EP0064155)

The process generally used for realizing the egg envisages the forming and subsequent joining of the two half-shells.

To form a half-shell, the melted chocolate is poured until it fills a cavity of a mould.

Once filled, the mould is overturned and the layer of chocolate is calibrated according to the viscosity thereof and the mechanical actions, such as vibrations, exerted on the mould, before being cooled.

Alternatively, the layer of chocolate is calibrated with a cold punch which moulds the tempered chocolate on the wall of the mould.

The half-shell is perimetrally joined to another half-shell produced in the same way, possibly interposing a surprise between the half-shells.

One of the drawbacks of the known technique for producing chocolate eggs consists of the fact that in order to confer the necessary mechanical resistance it is necessary to provide a certain minimum thickness of chocolate.

However the cost of the quantity of chocolate used has a significant influence on the price of the final product.

In addition to the above, the use of a higher quantity of chocolate implies an increased calorie content which is not always considered positive in diets.

The technical task which is proposed for the present invention is, therefore, to create an egg for the confectionery industry based on chocolate and/or pastry cream, and a procedure for its realization which makes it possible to eliminate the technical drawbacks complained of in the known art.

Within the scope of this technical task, an object of the invention is to realize an egg for the confectionery industry which, with the same dimensions, envisages the use of a lower quantity of chocolate and/or pastry cream and, therefore, a reduced calorie content.

Another object of the invention is to realize an egg for the confectionery industry which can be handled for eating without getting hands and/or lips dirty with chocolate.

Another object of the invention is to realize an egg for the confectionery industry that even in the presence of an increase in temperature prevents the packaging wrapper getting stuck to the chocolate.

Another object of the invention is to realize an egg for the confectionery industry which, with the same dimensions, has adequate mechanical resistance although produced with a reduced quantity of chocolate and/or pastry cream.

The technical task, as well as these and other objects according to the present invention are achieved by realizing an egg for the confectionery industry, characterized in that it comprises two half-parts, each one comprising an internal chocolate and/or pastry cream half-shell externally covered by an external wafer biscuit half-shell, there being comprised a uniform increase in the thickness of the chocolate and/or pastry cream along a perimeter edge of the internal chocolate and/or pastry cream half-shell and a uniform decrease in the thickness of the wafer biscuit along a perimeter edge of the external wafer biscuit half-shell.

In a preferred embodiment of the invention the internal chocolate half-shell has a central portion in which the chocolate and/or pastry cream is of a constant thickness and a peripheral portion in which the chocolate and/or pastry cream exhibits said increase in thickness with respect to the thickness of the chocolate and/or cream in said central portion, and in that the external wafer biscuit half-shell has a central portion in which the wafer biscuit is of a constant thickness and a peripheral portion in which the wafer biscuit exhibits said decrease in thickness with respect to the thickness of the wafer biscuit in said central portion.

In a preferred embodiment of the invention the perimeter edge of the external wafer biscuit half-shell is set back with respect to the perimeter edge of the internal chocolate and/or pastry cream half-shell.

In a preferred embodiment of the invention in said central portion the thickness of the wafer biscuit is greater than the thickness of the chocolate and/or pastry cream.

In a preferred embodiment of the invention the sum of the thickness of the chocolate and/or cream and the wafer biscuit at said central portion is equal to the sum of the thickness of the chocolate and/or pastry cream and the wafer biscuit at the perimeter edge of the internal chocolate and/or pastry cream half-shell and the external wafer biscuit half-shell.

In a preferred embodiment of the invention the uniform increase in thickness of the internal chocolate and/or cream half-shell and the uniform decrease in thickness of the external wafer biscuit half-shell are defined by a discontinuity in the variation of the radius of curvature of matching surfaces between the internal chocolate and/or pastry cream half-shell and the external wafer biscuit half-shell.

Finally, the present invention discloses a procedure for realizing an egg for the confectionery industry made up of two internal chocolate and/or pastry cream half-shells, each one externally covered by a corresponding external half-shell made of wafer biscuit, characterized in that it comprises the following steps:
- moulding the two external wafer biscuit half-shells with a uniform decrease in the thickness along a perimeter edge thereof;
- on each external wafer biscuit half-shell, moulding a corresponding internal chocolate and/or pastry cream half-shell with a uniform increase in thickness along a perimeter edge thereof, wherein the perimeter edge of the external wafer biscuit half-shell is arranged in a position set back from the perimeter edge of the corresponding internal chocolate and/or pastry cream half-shell;
- juxtaposing the two internal chocolate and/or cream half-shells along their perimeter edges, so as to create an empty space between the spaced perimeter edges of said external wafer biscuit half-shells; and
- joining the two juxtaposed internal chocolate and/or pastry cream half-shells by heating so as to soften said juxtaposed perimeter edges, thus causing interpenetration of said juxtaposed perimeter edges and causing the chocolate and/or pastry cream to spread in said empty space.

In substance, the present invention provides a chocolate and/or pastry cream egg in which the external wafer biscuit half-shells constitute a support for the internal chocolate and/or pastry cream shells so as to confer the necessary mechanical resistance to the product without it being necessary to greatly increase the thickness of the internal chocolate and/or pastry cream half-shells.

The mechanical resistance is optimized by the special provision of thicker perimeter edges of the internal chocolate and/or pastry cream half-shells which provide a localized excess of material necessary for realizing a solid join between the two half-shells.

Advantageously the thickening of the perimeter edges of the internal chocolate and/or pastry cream half-shells is compensated by a thinning to the same extent of the perimeter edges of the external wafer biscuit half-shells.

The setting back of the perimeter edges of the external wafer biscuit half-shells prevents any fragments, even partially detached from the perimeter edges of the external wafer biscuit half-shells at the end of moulding, becoming interposed between the perimeter edges of the juxtaposed internal chocolate and/or pastry cream half-shells and hampering the correct joining thereof.

Advantageously, the chocolate and/or pastry cream that melts during the moulding flows into the empty space between the perimeter edges of the external wafer biscuit half-shells and consolidates the join.

Further characteristics and advantages of the invention will become more clearly evident from the description of a preferred but non-limiting embodiment of the egg for the confectionery industry, and the procedure for its realization according to the invention, illustrated by way of non-limiting example in the appended drawings, in which:

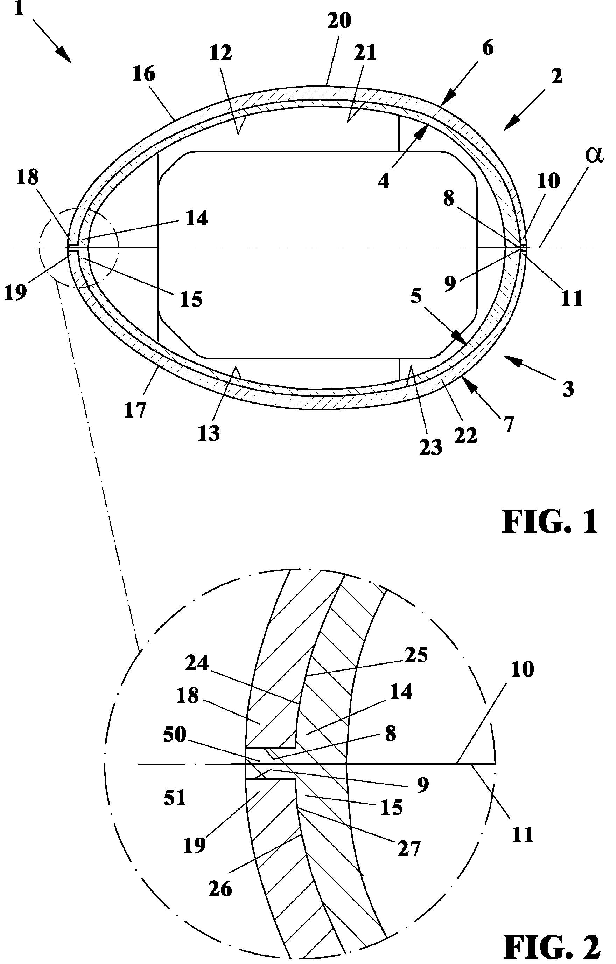

figure 1 shows a section of the egg in its orthogonal plane to the joining plane of the perimeter edges of the two chocolate and/or pastry cream half-shells, with a container inside for a surprise according to the invention;
figure 2 shows an enlarged view of the joining part of the internal and external half-shells according to the invention;

With reference to the figures mentioned, an egg for the confectionery industry is shown indicated overall with the reference number 1.

The egg 1 comprises two identical half-shells 2, 3 each in turn comprising an internal chocolate and/or pastry cream half-shell 4, 5 externally covered by a corresponding wafer biscuit half-shell 6, 7.

In the solution shown purely by way of example the perimeter edge 8, 9 of each external wafer biscuit half-shell 6, 7 is set back from the perimeter edge 10, 11 of the corresponding internal chocolate and/or pastry cream half-shell 4, 5.

Advantageously, the egg 1 has a uniform increase in thickness of chocolate along the whole perimeter edge 10, 11 of each internal chocolate and/or pastry cream half-shell 4, 5 and a uniform decrease in thickness of each wafer biscuit half-shell along the whole perimeter edge 8, 9 of each external wafer biscuit half-shell 6, 7.

In particular, each internal chocolate and/or pastry cream half-shell 4, 5 has a central portion 12, 13 in which the chocolate has a constant thickness and a peripheral portion 14, 15 including the perimeter edge 10, 11 of each internal chocolate and/or pastry cream half-shell 4, 5 in which the chocolate has a uniform increase in thickness with respect to the thickness of the chocolate and/or pastry cream in the central portion 12, 13.

Each external wafer biscuit half-shell 6, 7 instead has a central portion 16, 17 in which the wafer biscuit has a constant thickness and a peripheral portion 18, 19 including the perimeter edge 8, 9 of each external wafer biscuit half-shell 6, 7 in which the wafer biscuit has a uniform decrease in thickness with respect to the thickness of the wafer biscuit in the central portion 16, 17.

The central portion 16, 17 of each external wafer half-shell 6, 7 may have a greater thickness than that of the central portion 12, 13 of each internal chocolate and/or pastry cream half-shell 4, 5.

The sum of the thickness of chocolate at the central portion 12, 13 of each internal chocolate and/or pastry cream half-shell 4, 5 and the thickness of the wafer biscuit at the central portion 16, 17 of each external wafer biscuit half-shell 6, 7 is the same as the sum of the thickness of chocolate and/or pastry cream at the perimeter edge 10, 11 of each internal chocolate and/or pastry cream half-shell 4, 5 and the thickness of each wafer biscuit at the perimeter edge 8, 9 of each external wafer biscuit half-shell 6, 7.

By way of example, an egg is realized that has a height of approximately 70 mm and a width of approximately 50 mm with a thickness of chocolate and/or pastry cream equal to 1 mm at the central portion 12, 13 of each internal chocolate and/or pastry cream half-shell 4, 5, with a thickness of 2 mm of the wafer biscuit at the central portion 16, 17 of each external wafer biscuit half-shell 6, 7, with a thickness of chocolate and/or pastry cream of 1.5 mm at the perimeter edge 10, 11 of each internal chocolate and/or pastry cream half-shell 4, 5 and a thickness of 1.5 mm of wafer biscuit at the perimeter edge 8, 9 of each external wafer biscuit half-shell 6, 7.

The thickening of each internal chocolate and/or pastry cream half-shell 4, 5 and the thinning of each external wafer biscuit half-shell 6, 7 are defined by a discontinuity in the variation of the radius of curvature of matching surfaces 20, 21, 22, 23 between each internal chocolate and/or pastry cream half-shell 4,5 and the corresponding external wafer biscuit half-shell 6, 7.

In particular, such matching surfaces 20, 21, 22, 23 have a discontinuity in the variation of the radius of curvature considered in reference to any orthogonal plane to the joining plane α between two half-parts 2, 3, thus defining flattened areas 24, 25, 26, 27 of the matching surfaces 20, 21, 22, 23.

The procedure for the realization of the egg 1, in the non-limiting example in which the internal shell is made of chocolate, is as follows.

Through a first mould the external wafer biscuit half-shells 6, 7 are moulded.

In particular, after positioning a mixture on the male half-mould the first mould is closed, keeping the male half-mould still and making the female half-mould descend onto the male half-mould which by crushing the mixture causes it to spread uniformly into the moulding cavity.

When the moulded product solidifies, the first mould is opened, and the rough wafer biscuit half-shells 6, 7 are extracted, which are finally finished by milling to confer suitable smoothness and uniformity to their perimeter edges 8, 9.

The wafer biscuit half-shells 6, 7 are then inserted into a second mould in which the corresponding internal chocolate and/or pastry cream half-shells 4, 5 are overmoulded.

In the second mould, the male half-mould has an opening into which an injector is fixed, equipped with a heating means for maintaining the correct temperature of the tempered chocolate at the inlet to the moulding cavity and a heat insulation system for isolating the heating means from the male half-mould which is instead cooled for the solidification of the melted chocolate injected into the moulding cavity.

In substance, the second mould is first closed, then the injector injects the melted chocolate into the moulding cavity, and finally, after the solidification of the moulded product, the second mould opens.

The moulding is performed so that the perimeter edge 10, 11 of the internal chocolate and/or pastry cream half-shells 4, 5 slightly raises the perimeter edge 8, 9 of the external wafer biscuit half-shells 6, 7.

Subsequently, the two parts 2, 3 are joined, juxtaposing the two internal chocolate and/or pastry cream half-shells 4, 5 along their perimeter edges 10, 11, so as to create an empty space 50 between the spaced perimeter edges 8, 9 of the external wafer biscuit half-shells 6, 7.

Finally, the two juxtaposed chocolate half-shells 4, 5 are joined together by heating so as to soften their juxtaposed perimeter edges 10, 11 in order to cause the interpenetration of the juxtaposed perimeter edges 10, 11 and the chocolate to spread which totally fills the empty space 50.

This spreading of chocolate allows a valid join to be obtained between the two internal chocolate half-shells and the two external biscuit half-shells.

The egg for the confectionery industry based on chocolate and/or pastry cream and the procedure for its realization thus conceived are susceptible to numerous modifications and variants, all of which falling within the scope of the inventive concept. Moreover, all details may be replaced with other technically equivalent elements.

In practice the materials used, as well as the dimensions, can be any according to needs and the state of the art.

## Claims

1. An egg (1) for the confectionery industry, **characterized in that** it comprises two half-parts (2, 3), each one comprising an internal chocolate and/or pastry cream half-shell (4, 5) externally covered by an external wafer biscuit half-shell (6, 7), there being comprised a uniform increase in the thickness of the chocolate and/or pastry cream along a perimeter edge (10, 11) of the internal chocolate and/or pastry cream half-shell (4, 5) and a uniform decrease in the thickness of the wafer biscuit along a perimeter edge (8, 9) of the external wafer biscuit half-shell (6, 7).

2. The egg (1) for the confectionery industry according to claim 1, **characterized in that** the internal chocolate and/or pastry cream half-shell (4, 5) has a central portion (12, 13) in which the chocolate and/or pastry cream is of a constant thickness and a peripheral portion (14, 15) in which the chocolate and/or pastry cream exhibits said increase in thickness with respect to the thickness of the chocolate and/or pastry cream in said central portion (12, 13), and **in that** the external wafer biscuit half-shell (6, 7) has a central portion (16, 17) in which the wafer biscuit is of a constant thickness and a peripheral portion (18, 19) in which the wafer biscuit exhibits said decrease in thickness with respect to the thickness of the wafer biscuit in said central portion (16, 17).

3. The egg (1) for the confectionery industry according to any one of claim 1 and 9, **characterized in that** the perimeter edge (8, 9) of said external wafer biscuit half-shell (6, 7) is set back with respect to the perimeter edge (10, 11) of said internal chocolate and/or pastry cream half-shell (4, 5).

4. The egg (1) for the confectionery industry according to claim 2 or 3, **characterized in that** in said central portion (12, 13, 16, 17), the thickness of the wafer biscuit is greater than the thickness of the chocolate and/or pastry cream.

5. The egg (1) for the confectionery industry according to any one of claims 2 to 4, **characterized in that** the sum of the thickness of the chocolate and/or pastry cream and the wafer biscuit at said central portion (12, 13, 16, 17) is equal to the sum of the thickness of the chocolate and/or pastry cream and the wafer biscuit at the perimeter edge (8, 9, 10, 11) of the internal chocolate and/or pastry cream half-shell (4, 5) and of the external wafer biscuit half-shell (6, 7).

6. The egg (1) for the confectionery industry according to any one of claims 1 to 5, **characterized in that** said uniform increase in thickness and said uniform decrease in thickness are defined by a discontinuity in the variation of the radius of curvature of matching surfaces (20, 21, 22, 23) between the internal chocolate and/or pastry cream half-shell (4, 5) and the external wafer biscuit half-shell (6, 7).

7. The egg (1) for the confectionery industry according to claim 6, **characterized in that** said matching surfaces (20, 21, 22, 23) have flattened areas (24, 25, 26, 27) defined by a radius of curvature that changes.

8. A procedure for realizing an egg (1) for the confectionery industry, said egg (1) being made up of two half-shells (4, 5) made of chocolate and/or pastry cream, each half-shell (4, 5) being externally covered by a corresponding external half-shell made of wafer biscuit (6, 7), said procedure being **characterized in that** it comprises the following steps:
- moulding the two external wafer biscuit half-shells (6, 7) with a uniform decrease in the thickness along a perimeter edge (8, 9) thereof;
- on each external wafer biscuit half-shell (6, 7), moulding a corresponding internal chocolate and/or pastry cream half-shell (4, 5) with a uniform increase in thickness along a perimeter edge (10, 11) thereof, wherein the perimeter edge (8, 9) of the external wafer biscuit half-shell is arranged in a position set back from the perimeter edge (10, 11) of the corresponding internal chocolate and/or pastry cream half-shell (4, 5);
- juxtaposing the two internal chocolate and/or pastry cream half-shells (4, 5) along their perimeter edges (10, 11), so as to create an empty space (50) between the spaced perimeter edges (8, 9) of said external wafer biscuit half-shells (6, 7); and
- joining the two juxtaposed internal chocolate and/or pastry cream half-shells (4, 5) by heating so as to soften said juxtaposed perimeter edges (10, 11), thus causing interpenetration of said juxtaposed perimeter edges (10, 11) and causing the chocolate and/or pastry cream to spread in said empty space (50).

## Patentansprüche

1. Ei (1) für die Süßwarenindustrie, **dadurch gekennzeichnet, dass** es zwei Halbteilen (2, 3) umfasst, die jeweils eine innere Schokoladen- und/oder Konditorcremehalbschale (4, 5) umfassen, die außen von einer äußeren Waffelkekshalbschale (6, 7) bedeckt sind, umfassend darin eine gleichmäßige Dickenzunahme der Schokolade und/oder der Konditorcreme entlang einer Umfangskante (10, 11) der inneren Schokoladen- und/oder Konditorcremehalbschale (4, 5) und eine gleichmäßige Dickenabnahme des Waffelkekses entlang einer Umfangskante (8, 9) der äußeren Waffelkekshalbschale (6, 7).

2. Ei (1) für die Süßwarenindustrie nach Anspruch 1, **dadurch gekennzeichnet, dass** die innere Schokoladen- und/oder Konditorcremehalbschale (4, 5) einen Mittelabschnitt (12, 13) aufweist, in dem die Schokolade und/oder Konditorcreme eine konstante Dicke und einen Umfangsabschnitt (14, 15) aufweist, in dem die Schokolade und/oder Konditorcreme die Dickenzunahme in Bezug auf die Dicke der Schokolade und/oder Konditorcreme in dem Mittelabschnitt (12, 13) aufweist und dadurch, dass die äußere Waffelkekshalbschale (6, 7) einen Mittelabschnitt (16, 17) aufweist, in dem der Waffelkeks eine konstante Dicke und einen Umfansgabschnitt (18, 19) aufweist, in dem der Waffelkeks die Dickenabnahme in Bezug auf die Dicke des Waffelkekses in dem Mittelabschnitt (16, 17) aufweist.

3. Ei (1) für die Süßwarenindustrie nach einem der Ansprüche 1 und 9, **dadurch gekennzeichnet, dass** die Umfangskante (8, 9) der äußeren Waffelkekshalbschale (6, 7) in Bezug auf die Umfangskante (10, 11) der inneren Schockoladen- und/oder Konditorcremehalbschale (4, 5) zurückgesetzt ist.

4. Ei (1) für die Süßwarenindustrie nach Anspruch 2 oder 3, **dadurch gekennzeichnet, dass** in dem Mittelabschnitt (12, 13, 16, 17) die Dicke des Waffelkekses größer ist als die Dicke der Schokolade und/oder Konditorcreme.

5. Ei (1) für die Süßwarenindustrie nach einem der Ansprüche 2 bis 4, **dadurch gekennzeichnet, dass** die Summe der Dicke der Schokolade und/oder Konditorcreme und des Waffelkekses am Mittelabschnitt (12, 13, 16, 17) gleich der Summe der Dicke der Schokolade und/oder Konditorcreme und des Waffelkekses an der Umfangskante (8, 9, 10, 11) der inneren Schokoladen- und/oder Konditorcremehalbschale (4, 5) und der äußeren Waffelkekshalbschale (6, 7) ist.

6. Ei (1) für die Süßwarenindustrie nach einem der Ansprüche 1 bis 5, **dadurch gekennzeichnet, dass** die gleichmäßige Dickenzunahme und die gleichmäßige Dickenabnahme durch eine Diskontinuität in der Änderung des Krümmungsradius der Anpassungsflächen (20, 21, 22, 23) zwischen der inneren Schokoladen- und/oder Konditorcremehalbschale (4, 5) und der äußeren Waffelkekshalbschale (6, 7) definiert sind.

7. Ei (1) für die Süßwarenindustrie nach Anspruch 6, **dadurch gekennzeichnet, dass** die Anpassungsflächen (20, 21, 22, 23) abgeflachte Bereiche (24, 25, 26, 27) aufweisen, die durch einen Krümmungsradius definiert sind.

8. Verfahren zur Herstellung eines Eis (1) für die Süßwarenindustrie, wobei das Ei (1) aus zwei Halbschalen (4, 5) besteht, die aus Schokolade und/oder Konditorcreme sind, von denen jede Halbschale (4, 5) außen von einer entsprechenden äußeren Halbschale aus Waffelkeks (6, 7) bedeckt ist, **dadurch gekennzeichnet, dass** das Verfahren die folgenden Schritte umfasst:
- Formen der zwei äußeren Waffelkekshalbschalen (6, 7) mit einer gleichmäßigen Dickenzunahme entlang einer Umfangskante (8, 9) davon;
- Formen, auf jede äußere Waffelkekshalbschale (6, 7), einer entsprechenden inneren Schokoladen- und/oder Konditorcremehalbschale mit einer gleichmäßigen Dickenzunahme entlang einer Umfangskante (10, 11) davon, wobei die Umfangskante (8, 9) der äußeren Waffelkekshalbschale (6, 7) in einer von der Umfangskante (10, 11) der entsprechenden inneren Schokoladen- und/oder Konditorcremehalbschale (4, 5) zurückgesetzten Position angeordnet ist;
- Nebeneinander legen der zwei inneren Schokoladen- und/oder Konditorcremehalbschalen (4, 5) entlang ihrer Umfangskanten (10, 11), um einen leeren Bereich (50) zwischen den beabstandeten Umfangskanten (8, 9) der äußeren Waffelkekshalbschalen (6, 7) zu erzeugen; und
- Verbinden der zwei nebeneinander liegenden inneren Schokoladen- und/oder Konditorcremehalbschalen (4, 5) durch Erhitzen, um die nebeneinander liegenden Umfangskanten (10, 11) zu erweichen, wodurch ein gegenseitiges Durchdringen der nebeneinander liegenden Umfangskanten (10, 11) bewirkt wird und das Verteilen der Schokolade und/oder der Konditorcreme in dem leeren Bereich (50) bewirkt.

## Revendications

1. Œuf (1) pour l'industrie de la confiserie, **caractérisé en ce qu'**il comprend deux moitiés (2, 3), chacune comprenant une demi-coque interne (4, 5) de chocolat et/ou de crème pâtissière recouverte extérieurement par une demi-coque externe (6, 7) de gaufrette, dans lequel sont comprises une augmentation uniforme d'épaisseur de chocolat et/ou de crème pâtissière le long d'un bord périphérique (10, 11) de la demi-coque (4, 5) interne de chocolat et/ou de crème pâtissière et une réduction uniforme d'épaisseur de gaufrette le long d'un bord périphérique (8, 9) de la demi-coque externe (6, 7) de gaufrette.

2. Œuf (1) pour l'industrie de la confiserie selon la revendication 1, **caractérisé en ce que** la demi-coque interne (4, 5) de chocolat et/ou de crème pâtissière comporte une partie centrale (12, 13) dans laquelle le chocolat et/ou la crème pâtissière a une épaisseur constante et une partie périphérique (14, 15) dans laquelle le chocolat et/ou la crème pâtissière présente ladite augmentation d'épaisseur par rapport à l'épaisseur de chocolat et/ou de crème pâtissière dans ladite partie centrale (12, 13), et **en ce que** la demi-coque externe (6, 7) de gaufrette comporte une partie centrale (16, 17) dans laquelle la gaufrette a une épaisseur constante et une partie périphérique (18, 19) dans laquelle la gaufrette présente ladite réduction d'épaisseur par rapport à l'épaisseur de la gaufrette dans ladite partie centrale (16, 17).

3. Œuf (1) pour l'industrie de la confiserie selon l'une quelconque des revendications 1 et 9, **caractérisé en ce que** le bord périphérique (8, 9) de ladite demi-coque externe (6, 7) de gaufrette est en retrait par rapport au bord périphérique (10, 11) de ladite demi-coque interne (4, 5) de chocolat et/ou de crème pâtissière.

4. Œuf (1) pour l'industrie de la confiserie selon la revendication 2 ou 3, **caractérisé en ce que** dans ladite partie centrale (12, 13, 16, 17), l'épaisseur de la gaufrette est supérieure à l'épaisseur de chocolat et/ou de crème pâtissière.

5. Œuf (1) pour l'industrie de la confiserie selon l'une quelconque des revendications de 2 à 4, **caractérisé en ce que** la somme de l'épaisseur de chocolat et/ou de crème pâtissière et de gaufrette en correspondance de ladite partie centrale (12, 13, 16, 17) est égale à la somme de l'épaisseur de chocolat et/ou de crème pâtissière et de gaufrette en correspondance du bord périphérique (8, 9, 10, 11) de la demi-coque interne (4, 5) de chocolat et/ou de crème pâtissière et de la demi-coque externe (6, 7) de gaufrette.

6. Œuf (1) pour l'industrie de la confiserie selon l'une quelconque des revendications de 1 à 5, **caractérisé en ce que** ladite augmentation uniforme d'épaisseur et ladite réduction uniforme d'épaisseur sont définies par une discontinuité dans la variation du rayon de courbure des surfaces (20, 21, 22, 23) qui se correspondent entre la demi-coque interne (4, 5) de chocolat et/ou de crème pâtissière et la demi-coque externe (6, 7) de gaufrette.

7. Œuf (1) pour l'industrie de la confiserie selon la revendication 6, **caractérisé en ce que** lesdites surfaces (20, 21, 22, 23) se correspondant comportent des zones aplaties (24, 25, 26, 27) définies par un rayon de courbure qui change.

8. Procédé de fabrication d'un œuf (1) pour l'industrie de la confiserie, ledit œuf (1) étant constitué de deux demi-coques (4, 5) de chocolat et/ou de crème pâtissière, chaque demi-coque (4, 5) étant recouverte extérieurement par une demi-coque externe (6, 7) correspondante de gaufrette, ledit procédé étant **caractérisé en ce qu'**il comprend les étapes suivantes :
- mouler les deux demi-coques externes (6, 7) de gaufrette avec une réduction uniforme d'épaisseur le long d'un bord périphérique (8, 9) de celles-ci;
- sur chaque demi-coque externe (6, 7) de gaufrette, mouler une demi-coque interne (4, 5) correspondante de chocolat et/ou de crème pâtissière avec une augmentation uniforme d'épaisseur le long de son bord périphérique (10, 11), dans lequel le bord périphérique (8, 9) de la demi-coque externe de gaufrette est disposé dans une position en retrait à partir du bord périphérique (10, 11) de la demi-coque interne (4, 5) correspondante de chocolat et/ou de crème pâtissière ;
- juxtaposer les deux demi-coques internes (4, 5) de chocolat et/ou de crème pâtissière le long de leurs bords périphériques (10, 11), de sorte à créer un espace vide (50) entre les bords périphériques (8, 9) espacés desdites demi-coques externes (6, 7) de gaufrette ; et
- joindre les deux demi-coques internes (4, 5) juxtaposées de chocolat et/ou de crème pâtissière par chauffage de manière à ramollir lesdits bords périphériques (10, 11) juxtaposés, en provoquant ainsi l'interpénétration desdits bords périphériques (10, 11) juxtaposés et en provoquant l'étalement du chocolat et/ou de la crème pâtissière dans ledit espace vide (50).
